(19) Europäisches Patentamt
European Patent Office
Office européen des brevets

(11) **EP 2 875 339 B1**

(12) **FASCICULE DE BREVET EUROPEEN**

(45) Date de publication et mention
de la délivrance du brevet:
**07.09.2016 Bulletin 2016/36**

(21) Numéro de dépôt: **13756571.9**

(22) Date de dépôt: **18.07.2013**

(51) Int Cl.:
***G01N 21/958*** *(2006.01)*    ***G01N 21/90*** *(2006.01)*
***G01N 21/88*** *(2006.01)*

(86) Numéro de dépôt international:
**PCT/FR2013/051740**

(87) Numéro de publication internationale:
**WO 2014/016500 (30.01.2014 Gazette 2014/05)**

(54) **PROCEDE ET INSTALLATION POUR LA DETECTION NOTAMMENT DE DEFAUTS REFRACTANTS**

VERFAHREN UND VORRICHTUNG ZUR ERKENNUNG VON INSBESONDERE REFRAKTIONSDEFEKTEN

METHOD AND DEVICE FOR DETECTING, IN PARTICULAR, REFRACTING DEFECTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.07.2012 FR 1257117**

(43) Date de publication de la demande:
**27.05.2015 Bulletin 2015/22**

(73) Titulaire: **Tiama**
**69390 Vourles (FR)**

(72) Inventeurs:
• **COLLE, Olivier**
**F-69600 Oullins (FR)**
• **DROUET, Florence**
**F-91440 Bures Sur Yvette (FR)**
• **LECONTE, Marc**
**F-69700 Loire Sur Rhone (FR)**

(74) Mandataire: **Thibault, Jean-Marc**
**Cabinet Beau de Loménie**
**51, Avenue Jean Jaurès**
**B.P. 7073**
**69301 Lyon Cédex 07 (FR)**

(56) Documents cités:
**EP-A1- 1 006 350        EP-A1- 1 498 725**
**DE-A1- 19 741 384      FR-A1- 2 669 429**
**FR-A1- 2 794 241        FR-A1- 2 907 553**
**FR-A1- 2 958 040        FR-A1- 2 958 751**

**Description**

La présente invention concerne le domaine technique de l'inspection en ligne de récipients transparents ou translucides tels que par exemple, des bouteilles ou des flacons, pour déterminer des caractéristiques présentées par de tels récipients en vue de leur contrôle qualité.

La présente invention vise en particulier à inspecter des récipients en vue de détecter d'éventuels défauts des récipients, présentant la caractéristique de réfracter ou dévier la lumière, tels que par exemple, les défauts de type pli, peau d'orange, frottoir, frisé ... Dans la suite de la description, de tels défauts seront appelés défauts réfractants ou défauts de réfraction.

Dans la fabrication industrielle de récipients en verre creux par les procédés connus tels que le pressé-soufflé et le soufflé-soufflé, il est fréquent de constater que l'épaisseur de verre varie localement dans la paroi du récipient, même pour des articles de géométrie simple comme des bouteilles cylindriques. La surface extérieure, en contact avec le moule durant le formage, prend généralement la forme voulue. De ce fait, les variations de distribution du verre et donc d'épaisseur de la paroi se manifestent par des déformations de la surface intérieure. Lorsque ces variations sont faibles, elles n'ont pas d'inconvénients ni sur la solidité ni sur l'esthétique des récipients. En revanche, une mauvaise répartition du matériau conduit à des aspects esthétiques parfois gênants, et au-delà, à des défauts par manque de verre en certains endroits. Il est considéré qu'une bonne répartition du verre est une répartition homogène de l'épaisseur, donc des surfaces interne et externe quasiment parallèles partout. Dans les méthodes classiques, une mauvaise répartition de verre est caractérisée et détectée par des mesures d'épaisseur de verre, qui sont généralement ponctuelles ou localisées.

Dans l'état de la technique, diverses solutions ont été proposées pour détecter des défauts de réfraction de la lumière. Par exemple, le brevet FR 2 794 241 a proposé une machine adaptée pour détecter des défauts de réfraction sans faire tourner le récipient.

Cette machine comporte un convoyeur conçu pour amener jusqu'à un poste d'inspection les récipients à inspecter. Le poste d'inspection comporte une caméra située sur un côté du convoyeur et adaptée pour prendre une image du récipient. Le poste d'inspection comporte également, une source lumineuse située sur l'autre côté du convoyeur et associée à des moyens pour définir une intensité lumineuse à variation continue cyclique dans l'espace entre les extrêmes du sombre et du clair de la source lumineuse, avec un taux de modification qui est inférieur à celui qui est nécessaire pour une détection de défauts. Des défauts de réfraction du récipient, grâce à l'effet de lentille, présentent à la caméra des parties de la source lumineuse sous forme de compression. Cette image en compression de la source lumineuse avec un taux de variation d'intensité fortement accru améliore la détection d'un défaut réfractant en augmentant son contraste.

En pratique, cette technique ne permet pas de déceler des défauts réfractant la lumière présentant un faible pouvoir réfractant.

Une autre technique connue et par exemple décrite par le brevet US 5 004 909 propose un dispositif d'inspection des parois d'un récipient comportant une caméra permettant d'observer à travers un récipient entrainé en rotation, un motif lumineux composé de bandes alternées blanches et noires. Les déformations des bandes blanches et noires sont analysées pour permettre de détecter la présence d'un défaut réfractant la lumière.

En pratique, cette technique s'avère très sensible à la répartition du matériau constitutif des récipients. En effet, en cas de répartition de verre hétérogène mais acceptable, les réfractions provoquées par les pentes de la surface interne ont pour effet de déformer les motifs, de sorte qu'il devient quasiment impossible de les reconnaitre, les mesurer et les analyser dans les images. En conséquence, pour de telles productions, il n'apparait pas possible de distinguer les défauts réfractants des récipients, des irrégularités de l'épaisseur de la paroi des récipients.

Il est également connu, par la demande de brevet FR 2 907 553 un procédé et un dispositif comportant une source lumineuse pilotée pour produire un premier type d'éclairage homogène et un deuxième type d'éclairage formé de zones sombres et de zones claires alternées avec une variation spatiale discontinue. Ce dispositif comporte également des moyens de prise d'images des objets éclairés par le premier et le deuxième type d'éclairage en vue de détecter respectivement des défauts à fort contraste et des défauts à faible contraste.

Si un tel dispositif permet de détecter deux types de défauts avec une seule source ce dispositif permet difficilement de détecter certains types de défauts réfractants en raison principalement de la prise d'une seule image avec le deuxième type d'éclairage. En effet, les défauts à fort contraste sont détectés avec la source de lumière uniforme. En complément, les défauts à faible contraste sont détectés avec l'unique image obtenue lorsque la source présente des bandes alternées noires et blanches avec des bords francs et donc une variation discontinue. Dans cette image sont analysées des déformations des bords francs du motif à bandes ainsi que des contrastes locaux produits par les défauts réfractants. Lorsque le récipient possède des variations d'épaisseur et donc une mauvaise répartition de verre, les déformations du motif sont importantes et ne permettent plus de détecter efficacement les défauts à faible contraste.

La demande de brevet FR 2 958 040 décrit une méthode et une installation pour détecter la présence et l'altitude de défauts dans un composant optique consistant à produire un motif périodique lumineux qui est transmis à travers le composant optique, à acquérir successivement en transmission à travers le composant, des images du motif périodique décalé en phase à chaque acquisition, à calculer des images de phase à partir de ces images successives et à analyser lesdites images de phase pour en déduire la présence de défauts.

En pratique, cette technique n'est pas adaptée à l'inspection en ligne de récipients transparents ou translucides défilant à haute cadence entre une source lumineuse et un système, car elle nécessite l'arrêt prolongé des objets inspectés pour permettre l'acquisition des plusieurs images.

La présente invention vise donc à remédier aux inconvénients de l'art antérieur en proposant une nouvelle technique d'inspection en ligne de récipients transparents ou translucides, adaptée pour détecter au moins des défauts réfractants la lumière, indépendamment de l'homogénéité de répartition du matériau.

Un autre objet de l'invention est de proposer un procédé selon la revendication 1 permettant d'inspecter, les récipients se déplaçant en ligne avec une vitesse élevée, en vue de détecter, avec une grande fiabilité, au moins des défauts réfractants la lumière mais également au moins de déterminer la qualité de répartition du matériau constitutif du récipient.

Pour atteindre un tel objectif, le procédé selon l'invention vise l'inspection en ligne de récipients transparents ou translucides défilant selon une trajectoire déterminée $F_1$ à haute cadence entre une source lumineuse et un système de prise d'images des récipients et d'analyse des images prises, afin de déterminer des caractéristiques des récipients.

Selon l'invention :

- on illumine chaque récipient défilant à haute cadence par la source lumineuse présentant une variation d'intensité lumineuse selon un motif périodique de période $T_1$ selon au moins, une première direction de variation,
- on prend pour chaque récipient, un nombre N supérieur ou égal à trois images du récipient défilant devant la source lumineuse et occupant respectivement N positions différentes le long de la trajectoire de défilement,
- entre chaque prise d'image, on crée un décalage relatif entre le récipient et le motif périodique selon une direction de variation du motif périodique,
- on détermine et applique une transformation géométrique, dans au moins N-1 images d'un même récipient, pour au moins un ensemble de points appartenant au récipient, afin de mettre en coïncidence les pixels appartenant au récipient dans les N images successives d'un même récipient,
- on construit pour chaque récipient, à partir des N images recalées du récipient, une image de phase,
- on analyse l'image de phase afin d'en déduire en tant que caractéristique du récipient, au moins la présence d'un défaut réfractant la lumière ou la qualité de répartition du matériau constitutif du récipient.

Par image de phase, on désigne dans la suite de la description, une image, c'est-à-dire un tableau bidimensionnel de valeurs de pixels, lesdites valeurs exprimant la phase de la variation de niveau de gris d'un pixel entre les N images successives. La déviation de la lumière par les récipients traversés, selon l'effet de réfraction, provoque un décalage de ladite phase. Limage de phase contient donc une information quantifiant le pouvoir réfractant des récipients traversés.

De même, par image d'intensité, on désigne dans la suite de la description, une image, c'est-à-dire un tableau bidimensionnel de valeurs de pixels, lesdites valeurs exprimant une valeur d'intensité de lumière. L'image d'intensité de lumière contient une information quantifiant l'absorption par les récipients traversés, en fonction de leur nature et teinte.

Bien entendu dans la réalité, la réfraction peut avoir un effet sur une image d'intensité, mais cet effet n'est pas mesurable avec précision.

Un avantage procuré par la présente invention est de permettre de caractériser la répartition du matériau des récipients, par la distribution et l'intensité des réfractions produites par le non parallélisme des faces interne et externe de la paroi, autrement dit, par les effets de prismes induits, ou encore plus précisément par les pentes entre les deux surfaces interne et externe des récipients.

Le procédé d'inspection selon l'invention comporte également en combinaison l'une et/ou l'autre des caractéristiques additionnelles suivantes :

- construire, pour chaque récipient, à partir des N images recalées du récipient, une image d'intensité et analyser l'image d'intensité afin d'en déduire en tant que caractéristique du récipient la présence d'un défaut absorbant la lumière et/ou ses dimensions,
- pour analyser l'image de phase, déterminer la vitesse et/ou l'amplitude de variation et comparer lesdites vitesses et/ou amplitudes à des seuils afin de déterminer la présence d'un défaut réfractant la lumière ou la qualité de répartition du matériau constitutif du récipient,
- pour une variante de réalisation :

  ◦ à illuminer chaque récipient à inspecter à l'aide d'une source lumineuse présentant une variation d'intensité lumineuse selon un motif périodique de période $T_2$ selon une deuxième direction de variation différente à la première direction de variation,

o à prendre pour chaque récipient, un nombre N supérieur ou égal à trois images supplémentaires de l'objet défilant devant la source lumineuse, et occupant respectivement N positions différentes le long de la trajectoire de défilement,

o entre chaque prise d'image, à créer un décalage relatif entre le récipient et le motif périodique selon la deuxième direction de variation du motif périodique de période $T_2$,

○ à construire pour chaque récipient, à partir des N images recalées de l'objet, une seconde image de phase,

○ à analyser la seconde image de phase pour déterminer, en tant que caractéristique du récipient, la présence d'un défaut réfractant la lumière ou la qualité de répartition du matériau constitutif du récipient,

- choisir la période $T_1$, $T_2$ du motif périodique et l'occurrence des prises d'images de manière que les décalages relatifs du récipient et du motif périodique selon la direction de variation du motif périodique soient des fractions égales de la période du motif considéré,

- réaliser le décalage relatif entre le motif périodique et les récipients, par le défilement des récipients relativement au motif périodique restant fixe,

- réaliser le décalage relatif entre le motif périodique et les récipients en assurant le décalage du motif périodique entre chaque prise d'image,

- déclencher les prises d'images et/ou le décalage du motif d'éclairage en fonction de la position des récipients en défilement par rapport au système de prise d'images de manière à obtenir des décalages prédéfinis,

- choisir un motif périodique présentant selon la direction de variation, une fonction sinusoïdale du niveau de lumière émise,

- positionner le motif périodique de sorte qu'une variation d'intensité lumineuse intervienne selon au moins une direction parallèle à la direction de défilement des récipients,

- choisir un motif périodique rectiligne.

Le procédé selon l'invention consiste également à construire, pour chaque récipient, à partir des N images recalées du récipient, une image dite d'intensité, et analyser l'image d'intensité afin d'en déduire en tant que caractéristique du récipient, la présence d'un défaut absorbant la lumière et/ou ses dimensions. Pour calculer l'image d'intensité, il est nécessaire pour chaque point appartenant au récipient, de prendre en considération les N valeurs de niveaux de gris du pixel coïncidant dans chacune des N images recalées, puis à déterminer une intensité résultante en prenant par exemple le maximum et de préférence la somme ou la moyenne des N valeurs. L'intensité dans l'image ainsi obtenue dépend principalement de l'absorption de lumière par le récipient. Les défauts absorbants la lumière tels que des inclusions et salissures sont ainsi correctement déterminés. Cette image d'intensité est équivalente à l'image qui serait obtenue avec une source lumineuse uniforme, c'est-à-dire sans motif périodique, telle qu'utilisée traditionnellement pour le contrôle des récipients transparents. Ainsi, l'invention permet de déterminer de manière optimale, les caractéristiques liées à la réfraction par l'analyse de l'image de phase, et les caractéristiques liées à l'absorption par l'analyse de l'image d'intensité.

Un autre objet de l'invention est de proposer une installation d'inspection en ligne de récipients transparents ou translucides selon la revendication 12 afin de déterminer des caractéristiques des récipients et comprenant un moyen de transport des récipients en défilement au travers d'un poste d'inspection composé de au moins une source lumineuse disposée d'un côté des récipients en défilement, et au moins un système de prise d'images des récipients disposé de l'autre côté des récipients, et une unité d'analyse des images prises.

Selon l'invention :

- la source lumineuse présente une variation d'intensité lumineuse selon un motif périodique de période $T_1$ selon au moins une première direction de variation,

- le système de prise d'images est apte à réaliser un nombre N supérieur ou égal à trois images de chaque récipient placé devant la source lumineuse, étant créé entre chaque acquisition d'image, un décalage relatif entre le récipient et le motif périodique selon une direction de variation du motif périodique,

- l'unité de contrôle et de traitement comporte :

○ des moyens pour déterminer et appliquer une transformation géométrique dans au moins N-1 images d'un même récipient, afin de mettre en coïncidence les pixels appartenant au récipient dans les N images successives ainsi recalées d'un même récipient,

o des moyens de calcul d'au moins une image de phase à partir de N images recalées du récipient,

○ des moyens d'analyse des images de phase pour en déduire en tant que caractéristique du récipient, la présence d'un défaut réfractant la lumière ou la qualité de répartition du matériau constitutif du récipient.

L'installation d'inspection selon l'invention comporte également en combinaison l'une et/ou l'autre des caractéristiques additionnelles suivantes :

- l'unité de contrôle et de traitement comporte également des moyens de calcul d'au moins une image d'intensité à partir de N images recalées du récipient, issues du premier système de prise d'images et des moyens d'analyse des images d'intensité pour en déduire en tant que caractéristique du récipient, la présence d'un défaut absorbant la lumière, et/ou ses dimensions,
- pour la détection d'un défaut modifiant l'état de polarisation de la lumière, l'installation d'inspection comporte :

  • un filtre interposé entre les récipients et la source lumineuse, polarisant la lumière linéairement selon une première direction de polarisation ou circulairement selon un premier sens de rotation de polarisation,
  • un deuxième système de prise d'images apte à réaliser un nombre N supérieur ou égal à trois d'images de chaque récipient placé devant la source lumineuse,
  • un filtre interposé entre les récipients et le deuxième système de prise d'image, polarisant la lumière linéairement selon la direction de polarisation orthogonale à la première ou circulairement selon le sens de rotation de polarisation inverse du premier,

- une unité de contrôle et de traitement comportant :

  • des moyens pour déterminer et appliquer une transformation géométrique dans au moins N-1 images d'un même récipient issues du deuxième système de prise d'images, afin de mettre en coïncidence les pixels appartenant au récipient dans les N images successives ainsi recalées d'un même récipient,
  • des moyens de calcul d'au moins une image d'intensité à partir de N images recalées du récipient issues du deuxième système de prise d'images,
  • des moyens d'analyse de l'image d'intensité pour en déduire en tant que caractéristique du récipient, la présence d'un défaut modifiant l'état de polarisation de la lumière,

- le motif périodique de la source lumineuse est fixe de sorte que le décalage relatif entre le motif périodique et les récipients est réalisé par le défilement des récipients relativement au motif périodique,
- le motif périodique de la source lumineuse est décalé entre chaque prise d'image pour réaliser le décalage relatif entre le motif périodique et les récipients,
- le motif périodique de la source lumineuse est positionné de sorte qu'une variation d'intensité lumineuse intervienne selon au moins une direction parallèle à la direction du défilement des récipients,
- la source lumineuse est apte à présenter un motif périodique présentant selon sa direction de variation, une fonction sinusoïdale du niveau de lumière émise,
- le système de prise d'images est associé à des moyens de synchronisation afin d'être déclenchés en fonction de la position relative des récipients par rapport au motif périodique de la source lumineuse,
- l'unité de contrôle et de traitement commande la source lumineuse de manière que le motif lumineux périodique soit décalé dans une direction donnée pour chaque prise de vue.

Diverses autres caractéristiques ressortent de la description faite ci-dessous en référence aux dessins annexés qui montrent, à titre d'exemples non limitatifs, des formes de réalisation de l'objet de l'invention.

La **Figure 1** est une vue de dessus d'une machine d'inspection mettant en oeuvre le procédé conforme à l'invention.
Les **Figures 2** à **4** sont des vues en plan de sources lumineuses conformes à l'invention présentant des variations d'intensité lumineuse respectivement verticale, inclinée et horizontale.
Les **Figures 5** à **7** sont des exemples d'images prises successivement d'une source lumineuse à motif périodique fixe, à travers un récipient se déplaçant linéairement.
La **Figure 8** montre un exemple de trois images auxquelles une opération de recalage est appliquée.
La **Figure 9A** est un exemple d'une image de phase dépliée puis dérivée permettant la mise en évidence d'un défaut réfractant la lumière.
La **Figure 9B** montre les valeurs du signal de l'image illustrée à la **Fig. 9A** et prises selon la colonne de l'image, représentée par la référence **14.**
La **Figure 9C** montre le résultat du traitement du signal illustré à la **Fig. 9B** par un filtre passe-haut.

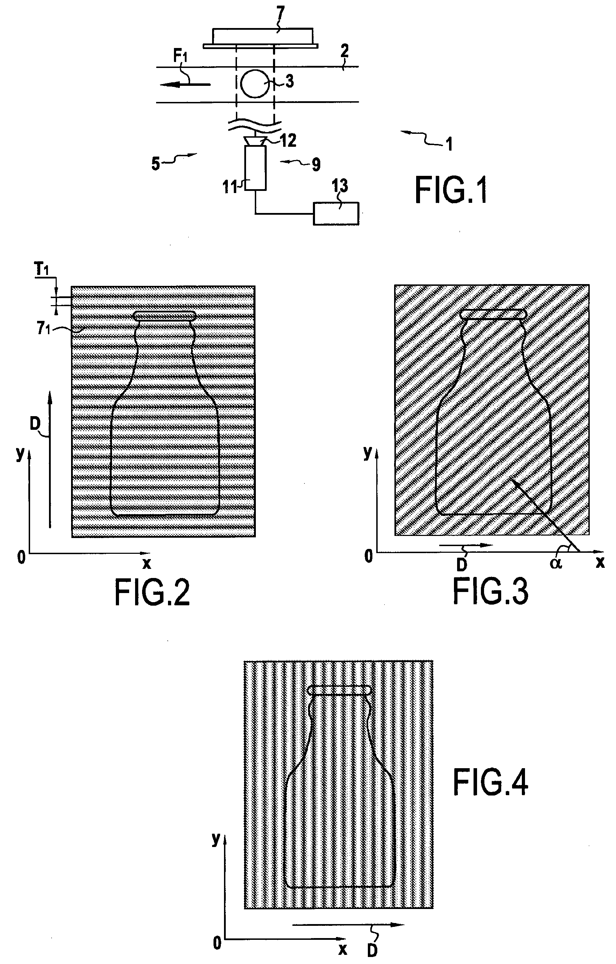

Tel que cela ressort de la **Fig. 1**, la machine d'inspection **1** selon l'invention comporte un moyen de transport **2** de récipients transparents ou translucides **3** selon une trajectoire déterminée par la flèche **F1,** à savoir une direction de déplacement horizontale linéaire dans l'exemple illustré. Les récipients **3** sont transportés en position dressée ou debout à haute cadence, c'est-à-dire typiquement de 50 à 600 articles par minute, c'est-à-dire à une vitesse de transport pouvant atteindre 1.2m/s. Les récipients **3** sont ainsi amenés à défiler successivement à haute cadence devant un poste d'inspection **5**.

Le poste d'inspection **5** comporte au moins une source lumineuse **7** disposée d'un côté du moyen de transport **2** et au moins un et selon un premier mode de réalisation un système **9** de prise d'images des récipients disposé de l'autre côté du moyen de transport **2**. Ainsi, tel que cela ressort plus précisément de la **Fig. 1,** chaque récipient **3** est amené à défiler lors de son transport, entre la source lumineuse **7** et le système **9** prenant des images des récipients **3** en association avec la source lumineuse **7**.

Le système de prise d'images **9** comporte au moins une caméra **11** munie d'un objectif **12** et reliée à une unité **13** de contrôle et de traitement des images prises. L'unité de contrôle et de traitement **13** assure la prise et l'analyse des images des récipients en vue d'en déduire au moins une caractéristique des récipients. Comme cela sera expliqué en détail dans la suite de la description, cette unité de contrôle et de traitement **13** permet de déduire, en tant que caractéristique des récipients, la présence d'un défaut réfractant la lumière et/ou la qualité de répartition du matériau constitutif du récipient.

Avantageusement, la caméra **11** est adaptée pour prendre des images d'un récipient **3** sur toute sa hauteur. A cet effet, la source lumineuse **7** comporte une surface émettrice de lumière, d'étendue suffisante pour rétroéclairer au moins une partie du champ observé correspondant à la zone du récipient à inspecter et en particulier la paroi du récipient selon toute sa hauteur. Il est à noter que le poste d'inspection **5** peut comporter plusieurs systèmes de prise d'images combinées à des sources lumineuses pour permettre une inspection sur tout ou partie de la circonférence des récipients lors de leur défilement devant le poste d'inspection **5**.

Selon une caractéristique de l'objet de l'invention, la source lumineuse **7** présente une variation d'intensité lumineuse selon un motif périodique **$7_1$** adapté pour être transmis à travers le récipient **3**. Ainsi, le motif lumineux périodique **$7_1$** est donc vu à travers le récipient **3,** par transmission. La source lumineuse **7** présente un motif d'intensité lumineuse périodique, de période **$T_1$**, selon au moins une première direction de variation **D**. Le motif lumineux périodique **$7_1$** de la source lumineuse tel qu'illustré par exemple aux **Fig. 2** à **4,** correspond à une variation spatiale de l'intensité lumineuse émise. Ainsi, différents points de la source lumineuse **7** émettent plus ou moins de lumière.

La variation d'intensité lumineuse (ou le contraste global) de la source lumineuse **7** peut s'étendre depuis un niveau sombre jusqu'à un niveau clair de lumière déterminé, selon au moins la première direction de variation. Cette variation d'intensité lumineuse selon cette première direction est une fonction périodique, par exemple quasi sinusoïdale et de préférence sinusoïdale. Une fonction périodique non sinusoïdale est utilisable bien que cela présente comme inconvénient de complexifier le calcul de phase et/ou de nécessiter l'acquisition d'un plus grand nombre **N** d'images, et par conséquent rend plus couteuse l'utilisation de l'invention pour inspecter en ligne des récipients transparents ou translucides en défilement.

Selon une caractéristique préférée de réalisation, le motif périodique **7,** présente, selon la direction de variation **D,** une variation d'intensité lumineuse sinusoïdale. Par exemple comme illustré aux **Fig**. **4** et **5,** la direction D étant horizontale parallèle à l'axe **x,** les valeurs d'intensité ou de luminosité de la source suivant la direction **x** varient entre un minimum Lo - A et un maximum Lo + A selon une formule

$$A \text{ et un maximum } Lo + A \text{ selon une formule } L(x) = Lo + A \sin(\omega.x + \varphi) \text{ où}$$

où

$L(x)$ intensité de lumière émise pour l'abscisse x
Lo intensité moyenne
A amplitude de variation
$\omega$ pulsation
$\varphi$ phase en x=0

Dans les exemples illustrés aux **Fig. 2, 3** et **4,** le motif lumineux périodique **$7_1$** présente une structure de franges lumineuses rectilignes. Sur les **Fig. 2** et **4,** la source lumineuse **7** présente une variation d'intensité lumineuse selon le motif périodique, maximale selon la direction **D** et nulle dans la direction perpendiculaire d'extension des franges lumineuses rectilignes. Selon ces exemples de réalisation, le motif périodique présente une variation d'intensité lumineuse sinusoïdale selon la direction de variation **D**. Ainsi, la source de lumière **7** comporte un motif d'intensité lumineuse **$7_1$** constitué par une succession de bandes ou de franges rectilignes alternées claires et sombres.

Dans la suite de la description, la direction de variation **D** de l'intensité lumineuse est considérée, par rapport aux directions horizontale et verticale prises dans un repère (0, x, y). Dans l'exemple illustré à la **Fig. 2,** la direction de variation **D** de l'intensité lumineuse de la source lumineuse **7** correspond à la variation maximale de l'intensité lumineuse qui est verticale (axe y) de sorte que selon la direction horizontale (axe x), l'intensité lumineuse de la source lumineuse est constante. Dans l'exemple illustré à la **Fig. 3,** la direction de variation **D** de l'intensité lumineuse de la source lumineuse **7** est représentée parallèle par rapport à la direction horizontale (axe x). La direction de la variation maximale de l'intensité lumineuse de la source lumineuse fait un angle d'inclinaison a par rapport à la direction horizontale (axe x). Dans l'exemple illustré à la **Fig. 4,** la direction de variation **D** de l'intensité lumineuse de la source lumineuse **7** est représentée parallèle à l'axe x de sorte que selon la direction verticale (axe y), l'intensité lumineuse de la source lumineuse **7** est constante.

Selon les exemples illustrés aux **Fig. 2** à **4,** la source lumineuse **7** présente un réseau de franges lumineuses parallèles à une seule direction. Il est à noter qu'il peut être envisagé que la source lumineuse **7** présente des franges selon plusieurs directions. Ainsi, le motif lumineux **7** peut présenter, des franges de formes différentes telles que des formes courbes, en cercles concentriques, en chevrons, etc. Ces complications du motif lumineux présentent un intérêt pour adapter la sensibilité de la détection selon les différentes régions de l'objet, en considérant que la détection est anisotrope en raison de l'orientation du motif.

La source lumineuse **7** est choisie essentiellement en fonction de la nature des caractéristiques du récipient à déterminer et, en fonction de la forme des récipients, comme cela sera compris dans la suite de la description.

Selon une caractéristique avantageuse de l'invention, il est à noter que le poste d'inspection **5** peut comporter plusieurs sources lumineuses **7** comportant des motifs périodiques présentant des variations d'intensité lumineuse s'établissant selon des directions différentes.

L'unité de contrôle et de traitement **13** pilote la caméra **11** de manière à réaliser pour chaque récipient **3** placé devant la source lumineuse **7,** un nombre **N** d'images supérieur ou égal à trois. Pour chaque image prise, le récipient **3** occupe une position différente le long de la trajectoire de défilement **F1**. Compte tenu du défilement continu des récipients **3** devant la caméra **11,** l'acquisition d'images successives par la caméra est réalisée alors que le récipient **3** occupe des positions différentes selon sa trajectoire de défilement $F_1$,

Selon une caractéristique de l'invention, entre chaque acquisition d'image, un décalage relatif entre le récipient **3** et le motif périodique $7_1$ est créé selon une direction de variation **D** du motif périodique $7_1$. Comme cela sera expliqué dans la suite de la description, il n'est pas obligatoire que le décalage relatif entre le récipient **3** et le motif périodique $7_1$ soit perpendiculaire aux franges.

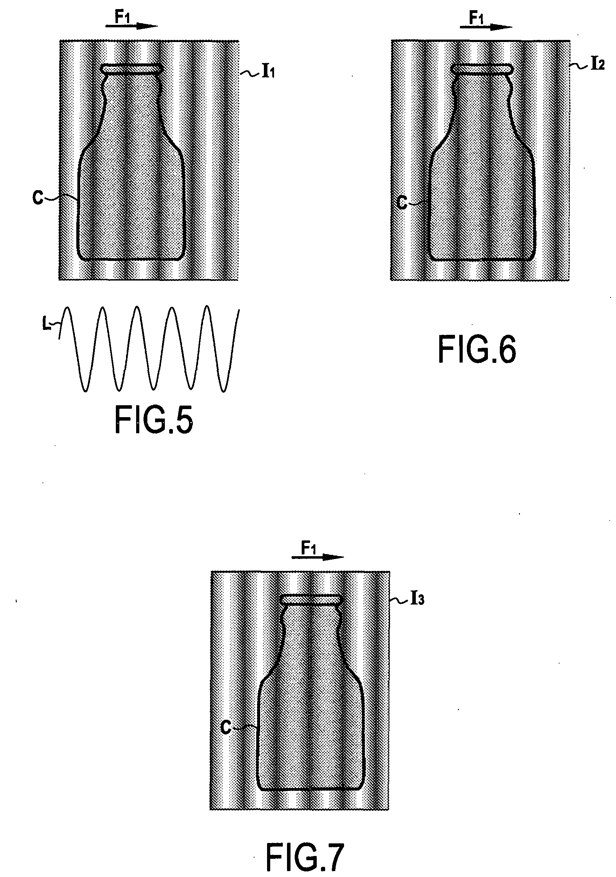

Selon une première variante de réalisation, illustrée plus précisément aux **Fig. 5** à **7,** le décalage relatif entre le récipient **3** et le motif périodique $7_1$ est réalisé par le défilement des récipients **3** devant le motif périodique $7_1$ qui reste fixe. Selon cet exemple préféré de réalisation, le déplacement naturel des récipients **3** par le moyen de transport **2** est mis à profit pour créer entre chaque prise d'image, un décalage spatial relatif selon la direction du motif périodique, entre le récipient **3** et le motif périodique $7_1$ de la source lumineuse **7.**

Dans l'exemple illustré aux **Fig**. **5** à **7,** le motif lumineux périodique $7_1$ utilisé est celui décrit à la **Fig. 4.** Le motif périodique $7_1$ est positionné par rapport au récipient **3** de manière à présenter une direction de variation de l'intensité lumineuse du motif lumineux $7_1$, parallèle à la direction de déplacement **F1** du récipient **3.** Dans l'exemple illustré aux **Fig. 5** à **7,** le décalage relatif entre le récipient **3** et le motif périodique $7_1$ est considéré horizontal, étant donné que la trajectoire de déplacement des récipients **3** est considérée comme horizontale en s'établissant selon la direction de variation **D** du motif périodique $7_1$. Les **Fig. 5** à **7** montrent trois images $I_1$, $I_2$, $I_3$ prises successivement d'un même récipient au cours de son déplacement devant le poste d'inspection **5.** Sur les **Fig. 5** à **7,** le récipient **3** est représenté par son contour ou son enveloppe **C.**

L'analyse comparative des images $I_1$, $I_2$, $I_3$ respectivement des **Fig. 5** à **7** conduit à constater que le récipient **3** s'est décalé selon la direction de déplacement $F_1$ du récipient, d'une image à l'autre devant le motif périodique $7_1$ qui reste fixe. En effet, le contour **C** du récipient **3,** s'est décalé (vers la droite) sur les trois images successives des **Fig. 5** à **7** compte tenu du sens de déplacement $F_1$ du récipient.

Il est à considérer qu'il peut être envisagé d'utiliser, alors que le récipient **3 se** déplace selon la trajectoire de déplacement horizontal, une source lumineuse **7** avec un motif périodique $7_1$ différent de celui illustré à la **Fig. 4.** Ainsi, il peut être prévu d'utiliser une source lumineuse **7** telle qu'illustrée à la **Fig. 3.** Selon cet exemple également, le motif périodique $7_1$ est positionné par rapport au récipient **3** de manière à présenter une direction de variation **D** de l'intensité lumineuse du motif lumineux $7_1$ parallèle par rapport à la direction de déplacement $F_1$ du récipient **3.** Ainsi, il est créé entre chaque prise d'image, un décalage relatif entre le récipient **3** et le motif périodique selon la direction de variation **D** du motif périodique illustrée à la **Fig. 3.**

Par contre, la source lumineuse **7** illustrée à la **Fig. 2** ne peut pas être utilisée si une telle source lumineuse est fixe tandis que le récipient se déplace selon la direction de déplacement $F_1$. Il n'existe pas entre chaque prise d'images, un décalage relatif entre le récipient **3** et le motif périodique $7_1$ selon une direction de variation du motif périodique. En effet, la source lumineuse **7** illustrée à la **Fig. 2** possède une intensité lumineuse constante selon la direction de déplacement $F_1$ du récipient **3.** Il doit donc être considéré que le motif périodique $7_1$ de la source lumineuse est positionné de manière que selon la direction de défilement des récipients **3,** le motif lumineux périodique $7_1$ possède

une variation d'intensité lumineuse périodique.

Selon une deuxième variante de réalisation, le décalage relatif entre le récipient **3** et le motif périodique $7_1$ est créé selon une direction de variation du motif périodique, par le décalage du motif périodique $7_1$ entre chaque prise d'image, et par le défilement des récipients **3** devant le motif périodique $7_1$. Selon cette deuxième variante de réalisation le récipient **3** est déplacé en translation devant la source lumineuse et le motif périodique $7_1$ est décalé entre chaque prise d'image.

Dans le cas où le déplacement du motif périodique $7_1$ est réalisé selon une direction horizontale (axe x), la source lumineuse illustrée à la **Fig. 3** peut être utilisée. La source lumineuse illustrée à la **Fig. 3** peut être utilisée avec un décalage du motif périodique, selon l'axe x ou selon l'axe y.

Bien entendu, il peut être envisagé de déplacer le motif périodique $7_1$ selon une direction de déplacement différente de l'axe horizontal de sorte que la source lumineuse **7** illustrée à la **Fig. 2** peut être utilisée. Ainsi, la source lumineuse **7** illustrée à la **Fig. 2** peut être utilisée dans le cas où la direction de déplacement $F_2$ du motif lumineux $7_1$ est effectuée selon la direction verticale (axe y) c'est-à-dire parallèle à la direction de variation du motif périodique.

Le décalage du motif périodique de la source lumineuse **7** peut être réalisé de toute manière appropriée. Ainsi, il peut être prévu de commander des sources ponctuelles d'éclairage, telles que des diodes électroluminescentes. De même, il peut être utilisé un écran de type LCD placé devant une source lumineuse uniforme et sur lequel est généré le motif lumineux périodique $7_1$, ou bien un vidéoprojecteur peut éclairer ou rétro éclairer un écran.

L'unité de contrôle et de traitement **13** acquiert en transmission, à travers chaque récipient **3** et à l'aide de la caméra **11**, au moins trois et de préférence cinq images du récipient qui présentent entre chacune d'elles, un décalage relatif entre le récipient et le motif périodique, selon une direction de variation **D** du motif périodique. Ainsi, pour chaque récipient **3**, l'unité de contrôle et de traitement **13** dispose d'au moins trois images dans lesquelles le motif périodique $7_1$ est décalé en phase par rapport au récipient.

L'unité de contrôle et de traitement détermine et applique une transformation géométrique, dans ces au moins N-1 images d'un même récipient, pour au moins un ensemble de points appartenant au récipient, afin de mettre en coïncidence les pixels appartenant au récipient dans les N images successives d'un même récipient.

L'unité de contrôle et de traitement **13** construit alors pour chaque récipient **3** à partir des N images de ce récipient **3,** une unique image de phase conformément par exemple au brevet EP 1980 843. Bien entendu, le calcul d'une image de phase, pour chaque récipient **3,** à partir de **N** images du récipient peut être réalisé à l'aide de diverses techniques.

Pour calculer l'image de phase du récipient, il est nécessaire pour chaque point appartenant au récipient, de prendre en considération les N valeurs du pixel coïncident dans chacune des N images (par exemple, si N = 3, $I_1$, $I_2$ et $I_3$), puis à déterminer la phase d'au moins chaque point du récipient à partir des N valeurs de niveaux de gris prises dans les N images, lesdites valeurs étant modifiées par le décalage relatif du motif périodique et du récipient, et les valeurs de phases calculées étant dépendantes des déviations ou réfractions du rayon optique issu du point du récipient considéré.

Il est à noter que dans la mesure où le récipient **3** est mobile et que le champ de la caméra est constant durant les N prises de vues, le récipient **3** est situé en des positions différentes sur les N images prises successivement et donc décalé du fait du défilement des articles dans le champ. Pour chaque point du récipient, afin d'obtenir les N valeurs de pixel pris dans les N images, il convient de mettre en coïncidence lesdits pixels appartenant au récipient dans les N images successives. L'objet de l'invention vise donc, dans au moins N-1 images d'un même récipient, à localiser le récipient ou son contour **C,** à déterminer puis à appliquer une transformation géométrique afin de mettre en coïncidence les pixels appartenant au récipient dans les N images successives d'un même récipient.

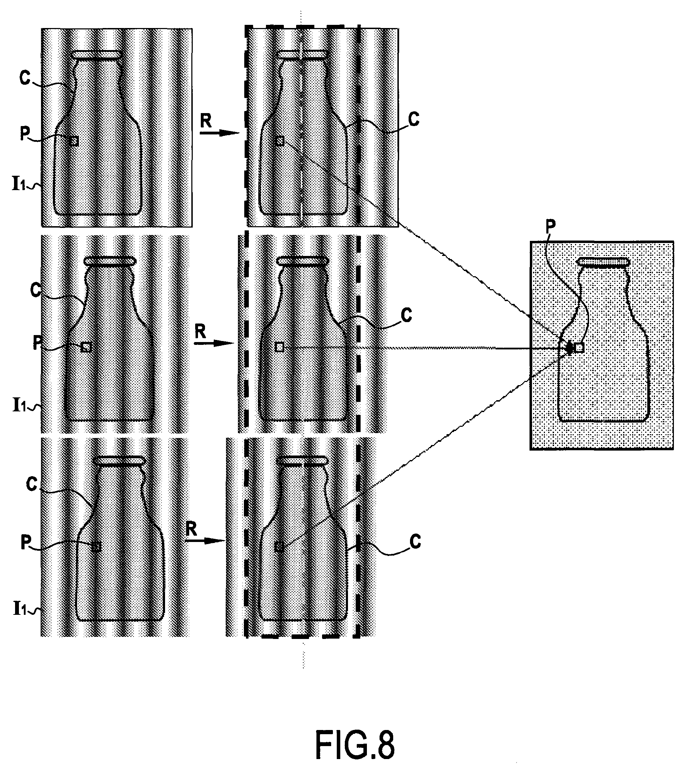

La **Fig. 8** illustre un exemple permettant d'illustrer le recalage ou la mise en coïncidence des pixels appartenant à un même récipient dans trois images successives $I_1$, $I_2$, $I_3$. L'analyse comparative des trois images $I_1$, $I_2$, $I_3$ représentées sur la partie gauche de la **Fig. 8** permet de constater que le contour **C** du récipient ou qu'un même point **P** du récipient s'est décalé dans les images $I_1$, $I_2$, $I_3$ vers la droite. En d'autres termes, les coordonnées du point **P** dans les images $I_1$, $I_2$, $I_3$ sont différentes.

La partie droite de la **Fig. 8** montre les trois images après l'opération de recalage **R** ou de mise en coïncidence des pixels appartenant au récipient. Cette opération permet le centrage du contour **C** et par suite du point **P** dans les trois images $I1$, $I_2$, $I_3$ dans lesquelles les coordonnées du point **P** sont identiques.

Ainsi, l'unité de contrôle et de traitement **13** comporte des moyens pour déterminer et appliquer une transformation géométrique dans au moins N-1 images d'un même récipient afin de mettre en coïncidence les pixels appartenant au récipient dans les N images successives d'un même récipient.

Ce recalage effectué, pour chaque point du récipient, la variation de son niveau de gris dans les N images est connue et correspond au décalage relatif du motif. On peut donc calculer la phase de chaque point du récipient. Ladite transformation géométrique comprend au moins une translation. Ladite transformation géométrique peut être prédéterminée, ou bien calculée pour chaque image à partir de la localisation des récipients dans les images.

Ladite transformation géométrique peut être appliquée à une image I entière, à une région rectangulaire ou non et englobant l'image du récipient ou bien encore uniquement aux pixels appartenant au récipient, c'est-à-dire à la région d'image définie par le contour **C** du récipient comme sur les **Fig. 5** à **7.**

Une solution pour assurer le recalage des images est de calculer par calibration, dans le cas où le déplacement physique du récipient est connu entre des images, le déplacement en pixels dans l'image et de translater les images par la valeur de ce déplacement.

Une autre solution consiste à détecter automatiquement dans les **N** images, des points d'intérêt fixes sur les récipients (par exemple les bords) et à déterminer une transformation géométrique permettant de recaler ces points d'intérêt, et appliquer la même transformation à l'ensemble du récipient ou de l'image.

A partir de **N** images acquises et recalées pour un même récipient, l'image de phase est calculée comme évoqué ci-dessus. Pour chaque récipient, l'unité de calcul et traitement **13** dispose de **N** images séparées par un déphasage constant de préférence. Un algorithme de calcul de phase est appliqué individuellement à chaque point du récipient. Le choix de l'algorithme de calcul de phase parmi les divers algorithmes disponibles, dépend en particulier du récipient, du motif périodique, de la vitesse de calcul, de la précision souhaitée, etc.

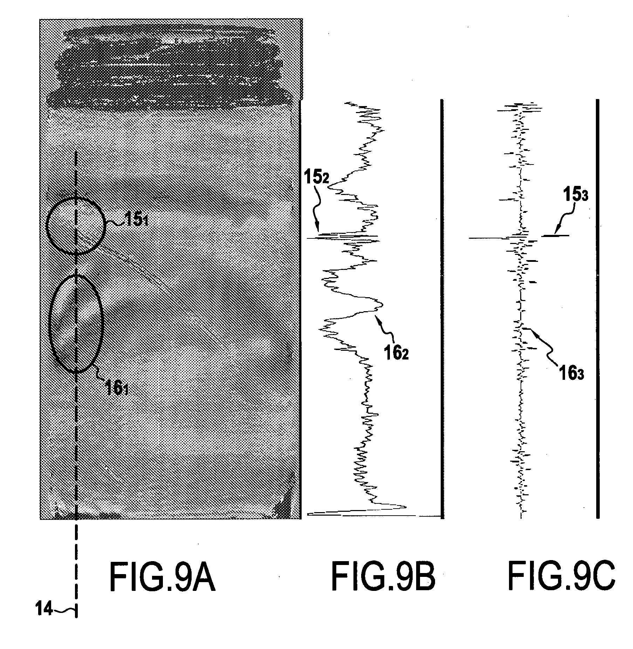

Il est à noter qu'il peut être envisagé, après l'opération visant à construire une image de phase pour chaque récipient, une opération facultative visant le dépliement de phase. En effet, de par la périodicité de la source lumineuse **7,** la phase obtenue se retrouve aussi périodiquement de sorte qu'elle est définie uniquement entre -$\pi$ et $\pi$. Il peut être envisagé de déplier la phase en vue d'éliminer les sauts de $2\pi$ pour obtenir la phase absolue. La **Fig. 9A** montre un exemple de ladite image absolue de phase dérivée.

L'unité de contrôle et de traitement **13** assure ensuite l'analyse de chaque image de phase et plus précisément des variations de la phase afin d'en déduire au moins une caractéristique du récipient **3.** Selon une première variante de réalisation, l'analyse de l'image de phase consiste à déterminer la vitesse et/ou l'amplitude de la variation du signal dans l'image de phase et à comparer les vitesses et/ou amplitudes à des seuils afin de déterminer la présence d'un défaut réfractant la lumière ou la qualité de répartition du matériau constitutif du récipient. Le traitement de chaque image de phase peut être réalisé selon diverses méthodes connues. Par exemple, il peut être prévu de détecter des variations locales (ou décalages) de phase par exemple, en comparant la phase de chaque point de l'image à celle de ses voisins. Une autre technique consiste à calculer en tout point, une pente de variation de la phase et à comparer le résultat en tout point à une valeur de seuil. Le calcul de cette pente de variation peut être réalisé selon une ou plusieurs directions appropriées.

Si la variation de la phase est rapide et d'amplitude supérieure à un seuil donné, alors il peut être déduit au moins une caractéristique du récipient à savoir la présence d'un défaut réfractant la lumière. Si la variation de la phase est lente et d'amplitude supérieure à un seuil donné, alors il peut être déduit au moins une autre caractéristique du récipient, à savoir une mauvaise répartition du matériau constitutif du récipient.

Selon une deuxième variante de réalisation, une analyse fréquentielle de l'image de phase est réalisée permettant de sélectionner les variations en fonction de leur fréquence spatiale et donc de détecter la présence de défauts réfractants voire même de qualifier la qualité de la peau du verre par l'amplitude des hautes fréquences, et la qualité de répartition de matière par l'amplitude des basses fréquences.

Les variations de la phase dépendent directement des déviations ou réfractions de lumière par le récipient sous l'effet des défauts réfractant et de la répartition du verre.

La **Fig. 9A** illustre un exemple d'image de phase dépliée puis dérivée permettant la mise en évidence d'un défaut réfractant la lumière. Dans cette image de la **Fig. 9A,** la référence **15₁** signale la présence d'un pli sur le récipient. La référence **16₁** indique des variations lentes de la phase dues à la déviation de la lumière par la répartition hétérogène du verre et apparaissant par des régions claires et sombres.

Le défaut réfractant, à savoir le pli **15₁** dans l'exemple considéré, est facilement localisé par sa signature **15₂** apparaissant dans le signal de l'image illustrée à la **Fig. 9B** et pris selon la colonne de l'image portant le repère **14.** Le défaut réfractant provoque dans le signal, des pentes fortes de variation locale. Dans ce signal de l'image pris selon la colonne **14,** il peut être décelé des variations lentes liées à la répartition hétérogène du verre, ces variations lentes étant repérées par la référence **16₂** dans le signal de la **Fig. 9B.**

La **Fig. 9C** montre le résultat du traitement du signal illustré à la **Fig. 9B,** par un filtre passe-haut. Le défaut **15₁** apparaissant dans l'image de la **Fig. 9A** est facilement détectable, dans le signal illustré à la **Fig. 9C** (référence **15₃**) car l'amplitude des variations locales du signal est forte.

Dans ce signal illustré à la **Fig. 9C,** la référence **16₃** repère les variations lentes liées à la répartition hétérogène du verre. Il est à noter que le caractère hétérogène de la répartition du verre n'altère pas la détection du défaut réfractant car cette répartition hétérogène du verre ne produit pas, comme cela apparait au niveau de la référence **16₃,** de modifications du signal.

Il doit être considéré que le motif périodique **7₁** est observé à travers les récipients donc pour la zone centrale à travers quatre dioptres successifs : air-verre, verre-air, air-verre et verre-air, correspondant respectivement aux quatre surfaces externe, interne, interne et externe traversées par la lumière. Ces surfaces étant non uniformément parallèles entre elles du fait de la réparation hétérogène du matériau et de la présence de défauts de surface, de bouillons, etc...,

elles dévient la lumière à la manière de prismes. Le motif lumineux périodique $7_1$ s'en trouve déformé lorsqu'il est observé à travers le récipient transparent. Contrairement aux techniques visant à détecter uniquement des déformations des motifs et l'apparition, au sein des motifs, de points ou zones de contraste local, le décalage de phase permet un calcul de phase qui est une mesure des déviations subies par les rayons lumineux, ce qui permet d'en faire une analyse fine et discriminante conduisant à caractériser le pouvoir réfractant des défauts et la qualité de répartition du matériau.

Dans les exemples décrits ci-dessus, il est prévu d'illuminer chaque récipient, à l'aide d'une source lumineuse présentant une variation d'intensité lumineuse selon une direction de variation **D**. Selon une autre variante de réalisation, il est à noter qu'il peut être envisagé d'illuminer chaque récipient à l'aide d'une source lumineuse présentant une variation d'intensité lumineuse selon un motif périodique de période $T_2$ selon une deuxième direction de variation différente de la première direction de variation **D**. Ainsi, par exemple, il peut être prévu d'illuminer chaque récipient à l'aide des sources lumineuses comportant les motifs périodiques illustrés aux **Fig. 2** et **4.** Selon cette variante de réalisation, le procédé selon l'invention consiste :

- à prendre pour chaque récipient, un nombre **N** supérieur ou égal à trois images supplémentaires de l'objet défilant devant la source lumineuse présentant un motif périodique de période $T_2$, et occupant respectivement **N** positions différentes le long de la trajectoire de défilement,
- entre chaque prise d'image, à créer un décalage relatif entre le récipient et le motif périodique selon la deuxième direction de variation du motif périodique de période $T_2$,
- à construire pour chaque récipient, à partir des **N** images de l'objet, une seconde image de phase,
- à analyser la seconde image de phase pour détecter des variations de la phase supérieure ou inférieure à un seuil déterminé afin d'en déduire la présence d'un défaut du récipient.

Selon une caractéristique avantageuse de réalisation, il est à noter que la période du motif périodique $7_1$ d'une part et l'occurrence des prises d'images et/ou le décalage du motif sur la source commandée d'autre part, sont choisis de manière que les décalages relatifs du récipient **3** et du motif périodique $7_1$ selon la direction de variation du motif périodique sont une décomposition en fractions égales de la période du motif périodique considéré. Par exemple, dans la variante pour laquelle seul le défilement des articles crée le décalage relatif du motif par rapport au récipient, et dans le cas de la prise de cinq images (**N**=5), chaque image est prise pour être décalée d'un cinquième de la période du motif périodique $7_1$, c'est-à-dire que le déplacement entre chaque prise d'image est d'un cinquième de ladite période.

Selon une caractéristique avantageuse de réalisation, l'unité de contrôle et de traitement **13** commande la source lumineuse **7**. L'unité de contrôle et de traitement **13** peut commander la source lumineuse **7** de manière que le motif lumineux périodique $7_1$ soit décalé dans une direction donnée pour chaque prise de vue. Elle peut pour cela adresser par exemple un écran LCD, un vidéoprojecteur, des circuits de LEDs ou toute source lumineuse adaptée.

Selon une caractéristique de réalisation, l'unité de contrôle et de traitement **13** déclenche les acquisitions en fonction de la position précise du récipient devant la source lumineuse **7**. L'unité de contrôle et de traitement **13** peut être, pour cela, reliée à des capteurs de présence et/ou déplacement tels que cellules et codeurs incrémentaux.

Selon un deuxième mode de réalisation du poste d'inspection, l'unité de contrôle et de traitement **13** comporte également des moyens de calcul d'au moins une image d'intensité à partir de N images recalées du récipient issues du système de prise d'images **9** et des moyens d'analyse des images d'intensité pour en déduire en tant que caractéristique du récipient **3,** la présence d'un défaut absorbant la lumière, et/ou des dimensions du récipient.

Selon un troisième mode de réalisation, le poste d'inspection comporte un filtre interposé entre les récipients **3** et la source lumineuse **7,** polarisant la lumière linéairement selon une première direction de polarisation ou circulairement selon un premier sens de rotation de polarisation. Le poste d'inspection comporte également un deuxième système de prise d'images **9** analogue au premier système de prise d'images et apte à réaliser un nombre N supérieur ou égal à trois d'images de chaque récipient placé devant la source lumineuse. Le poste comporte aussi un filtre interposé entre les récipients **3** et le deuxième système de prise d'image, polarisant la lumière linéairement selon la direction de polarisation orthogonale à la première ou circulairement selon le sens de rotation de polarisation inverse du premier. Selon cet exemple, l'unité de contrôle et de traitement **13** comporte également :

- des moyens pour déterminer et appliquer une transformation géométrique dans au moins N-1 images d'un même récipient issues du deuxième système de prise d'images, afin de mettre en coïncidence les pixels appartenant au récipient dans les N images successives ainsi recalées d'un même récipient,
- des moyens de calcul d'au moins une image d'intensité à partir des N images recalées du récipient issues du deuxième système de prise d'images,-des moyens d'analyse de l'image d'intensité pour en déduire en tant que caractéristique du récipient **3**, la présence d'un défaut modifiant l'état de polarisation de la lumière.

En effet, il est connu d'utiliser la lumière polarisée pour détecter des défauts dit de stress, c'est-à-dire des contraintes locales internes dans le verre d'origine thermique ou mécanique. Par exemple, un corps étranger crée au cours du refroidissement d'un récipient en verre, des contraintes dans le verre l'entourant. Du fait de la biréfringence du verre, ces contraintes modifient l'état de polarisation de la lumière traversant le matériau. Il peut donc être déterminé la présence des défauts de stress en combinant une source de lumière polarisée située d'un côté du récipient et une observation en transmission à travers un filtre polarisant orthogonal au premier. L'homme du métier sait sans peine réaliser la même détection en polarisation circulaire.

La combinaison des divers modes de réalisation de l'invention permet d'utiliser une seule source de lumière et seulement 2 systèmes de prise d'image pour déterminer en tant que caractéristique du récipient 3, la présence d'un défaut réfractant la lumière, la qualité de répartition du matériau constitutif du récipient, la présence d'un défaut absorbant la lumière, la présence d'un défaut modifiant l'état de polarisation de la lumière et/ou les dimensions du récipient.

**Revendications**

1.  - Procédé optique d'inspection en ligne de récipients transparents ou translucides **(3)** défilant selon une trajectoire déterminée F1 à haute cadence entre une source lumineuse **(7)** et un système **(9)** de prise d'images des récipients et d'analyse des images prises, afin de déterminer en tant que caractéristique du récipient **(3),** au moins la présence d'un défaut réfractant la lumière ou la qualité de répartition du matériau constitutif du récipient, consistant à illuminer chaque récipient **(3)** défilant à haute cadence par la source lumineuse **(7)** présentant une variation d'intensité lumineuse selon un motif périodique $(7_1)$ de période $T_1$ selon au moins une première direction de variation **(D)**, **caractérisé en ce que**:

    • on prend pour chaque récipient **(3),** un nombre N supérieur ou égal à trois, d'images du récipient défilant devant la source lumineuse et occupant respectivement N positions différentes le long de la trajectoire de défilement,
    • entre chaque prise d'image, on crée un décalage relatif entre le récipient et le motif périodique selon la première direction de variation **(D)** du motif périodique **($7_1$),**
    • on détermine et applique une transformation géométrique, dans au moins N-1 images d'un même récipient, pour au moins un ensemble de points appartenant au récipient, afin de mettre en coïncidence les pixels appartenant au récipient dans les N images successives ainsi recalées d'un même récipient
    • on construit pour chaque récipient **(3)**, à partir des N images successives recalées du récipient, une image de phase,
    • on analyse l'image de phase afin d'en déduire en tant que caractéristique du récipient **(3),** au moins la présence d'un défaut réfractant la lumière ou la qualité de répartition du matériau constitutif du récipient.

2.  Procédé selon la revendication 1, **caractérisé en ce que** :

    • on construit pour chaque récipient **(3),** à partir des N images successives recalées du récipient, une image d'intensité,
    • on analyse l'image d'intensité afin d'en déduire en tant que caractéristique du récipient **(3),** la présence d'un défaut absorbant la lumière et/ou les dimensions du récipient

3.  Procédé selon la revendication 1, **caractérisé en ce que** l'analyse de l'image de phase consiste à déterminer la vitesse et/ou l'amplitude de variation et à comparer lesdites vitesses et/ou amplitudes à des seuils afin de déterminer la présence d'un défaut réfractant la lumière ou la qualité de répartition du matériau constitutif du récipient.

4.  Procédé selon la revendication 1, **caractérisé en ce qu'**il consiste :

    ○ à illuminer chaque récipient **(3)** à inspecter à l'aide d'une source lumineuse **(7)** présentant une variation d'intensité lumineuse selon un motif périodique de période $T_2$ selon une deuxième direction de variation différente de la première direction de variation,
    ○ à prendre pour chaque récipient, un nombre N supérieur ou égal à trois images supplémentaires de l'objet défilant devant la source lumineuse, et occupant respectivement N positions différentes le long de la trajectoire de défilement,
    o entre chaque prise d'image, à créer un décalage relatif entre le récipient et le motif périodique selon la deuxième direction de variation du motif périodique de période $T_2$,
    o à construire pour chaque récipient, à partir des N images recalées de l'objet, une seconde image de phase,
    o à analyser la seconde image de phase pour déterminer, en tant que caractéristique du récipient **(3),** la présence d'un défaut réfractant la lumière ou la qualité de répartition du matériau constitutif du récipient.

**5.** Procédé selon la revendication 4, **caractérisé en ce qu'**il consiste à choisir la période $T_1$, $T_2$ du motif périodique et l'occurrence des prises d'images de manière que les décalages relatifs du récipient **(3)** et du motif périodique **($7_1$)** selon la direction de variation du motif périodique soient des fractions égales de la période du motif considéré.

**6.** Procédé selon l'une des revendications 1 à 5, **caractérisé en ce qu'**il consiste à réaliser le décalage relatif entre le motif périodique **($7_1$)** et les récipients **(3),** par le défilement des récipients **(3)** relativement au motif périodique **($7_1$)** restant fixe.

**7.** Procédé selon l'une des revendications 1 à 5, **caractérisé en ce qu'**il consiste à réaliser le décalage relatif entre le motif périodique **($7_1$)** et les récipients **(3)** en assurant le décalage du motif périodique entre chaque prise d'image.

**8.** Procédé selon l'une des revendications 1 à 7, **caractérisé en ce qu'**il consiste à déclencher les prises d'images et/ou le décalage du motif d'éclairage en fonction de la position des récipients **(3)** en défilement par rapport au système **(9)** de prise d'images de manière à obtenir des décalages prédéfinis.

**9.** Procédé selon l'une des revendications 1 à 8, **caractérisé en ce qu'**il consiste à choisir un motif périodique **($7_1$)** présentant selon la direction de variation **(D),** une fonction sinusoïdale du niveau de lumière émise.

**10.** Procédé selon l'une des revendications 1 à 9, **caractérisé en ce qu'**il consiste à positionner le motif périodique de sorte qu'une variation d'intensité lumineuse intervienne selon au moins une direction parallèle à la direction de défilement des récipients.

**11.** Procédé selon l'une des revendications 1 à 10, **caractérisé en ce qu'**il consiste à choisir un motif périodique rectiligne.

**12.** Installation d'inspection en ligne de récipients transparents ou translucides **(3)** afin de détecter des caractéristiques des récipients et comprenant un moyen de transport **(2)** des récipients **(3)** en défilement continu à haute cadence au travers d'un poste d'inspection **(5)** composé de au moins une source lumineuse **(7)** disposée d'un côté des récipients en défilement continu à haute cadence, et au moins un système de prise d'images **(9)** des récipients disposé de l'autre côté des récipients, et une unité d'analyse des images prises
la source lumineuse **(7)** présentant une variation d'intensité lumineuse selon un motif périodique de période $T_1$ selon au moins une première direction de variation **(D), caractérisé en ce que** :

  • un premier système de prise d'images **(9)** est apte à réaliser un nombre N supérieur ou égal à trois d'images de chaque récipient placé devant la source lumineuse, étant créé entre chaque acquisition d'image, un décalage relatif entre le récipient **(3)** et le motif périodique **($7_1$)** selon la première direction de variation **(D)** du motif périodique **($7_1$),**
  • une unité de contrôle et de traitement (13) comporte :

    ◦ des moyens pour déterminer et appliquer une transformation géométrique dans au moins N-1 images d'un même récipient issues du premier système de prise d'images, afin de mettre en coïncidence les pixels appartenant au récipient dans les N images successives ainsi recalées d'un même récipient,
    o des moyens de calcul d'au moins une image de phase à partir de N images successives recalées du récipient,
    o des moyens d'analyse des images de phase pour en déduire au moins en tant que caractéristique du récipient **(3),** la présence d'un défaut réfractant la lumière ou la qualité de répartition du matériau constitutif du récipient.

**13.** Installation d'inspection selon la revendication 12, **caractérisée en ce que** l'unité de contrôle et de traitement **(13)** comporte également des moyens de calcul d'au moins une image d'intensité à partir de N images recalées du récipient, issues du premier système de prise d'images et des moyens d'analyse des images d'intensité pour en déduire en tant que caractéristique du récipient **(3),** la présence d'un défaut absorbant la lumière, et/ou ses dimensions.

**14.** Installation d'inspection selon la revendication 13, **caractérisée en ce qu'**elle comporte :

  • un filtre interposé entre les récipients **(3)** et la source lumineuse **(7),** polarisant la lumière linéairement selon une première direction de polarisation ou circulairement selon un premier sens de rotation de polarisation,
  • un deuxième système de prise d'images **(9)** apte à réaliser un nombre N supérieur ou égal à trois d'images de chaque récipient placé devant la source lumineuse,

• un filtre interposé entre les récipients et le deuxième système de prise d'image, polarisant la lumière linéairement selon la direction de polarisation orthogonale à la première ou circulairement selon le sens de rotation de polarisation inverse du premier,

• une unité de contrôle et de traitement **(13)** comportant :

o des moyens pour déterminer et appliquer une transformation géométrique dans au moins N-1 images d'un même récipient issues du deuxième système de prise d'images, afin de mettre en coïncidence les pixels appartenant au récipient dans les N images successives ainsi recalées d'un même récipient,

◦ des moyens de calcul d'au moins une image d'intensité à partir de N images recalées du récipient issues du deuxième système de prise d'images,

◦ des moyens d'analyse de l'image d'intensité pour en déduire en tant que caractéristique du récipient **(3),** la présence d'un défaut modifiant l'état de polarisation de la lumière.

15. Installation selon l'une des revendications 12 à 14, **caractérisée en ce que** le motif périodique $(7_1)$ de la source lumineuse **(7)** est fixe de sorte que le décalage relatif entre le motif périodique $(7_1)$ et les récipients **(3)** est réalisé par le défilement des récipients **(3)** relativement au motif périodique $(7_1)$**.**

16. Installation selon l'une des revendications 12 à 14, **caractérisée en ce que** le motif périodique $(7_1)$ de la source lumineuse **(7)** est décalé entre chaque prise d'image pour réaliser le décalage relatif entre le motif périodique $(7_1)$ et les récipients **(3).**

17. Installation selon l'une des revendications 12 à 16, **caractérisée en ce que** le motif périodique $(7_1)$ de la source lumineuse **(7)** est positionné de sorte qu'une variation d'intensité lumineuse intervienne selon au moins une direction parallèle à la direction du défilement des récipients.

18. Installation d'inspection selon l'une des revendications 12 à 17, **caractérisée en ce que** la source lumineuse **(7)** est apte à présenter un motif périodique $(7_1)$ présentant selon sa direction de variation, une fonction sinusoïdale du niveau de lumière émise.

19. Installation d'inspection selon l'une des revendications 12 à 18, **caractérisée en ce que** le système de prise d'images **(9)** est associé à des moyens de synchronisation afin d'être déclenché en fonction de la position relative des récipients par rapport au motif périodique de la source lumineuse **(7).**

20. Installation d'inspection selon l'une des revendications 12 à 19, **caractérisée en ce que** l'unité de contrôle et de traitement **(13)** commande la source lumineuse **(7)** de manière que le motif lumineux périodique $(7_1)$ soit décalé dans une direction donnée pour chaque prise de vue.

**Patentansprüche**

1. Optisches Verfahren zur Inline-Prüfung von transparenten oder transluzenten Behältern (3), die entlang eines bestimmten Weges $F_1$ mit hohem Tempo zwischen einer Lichtquelle (7) und einem System (9) zur Aufnahme von Bildern der Behälter und zur Analyse der aufgenommenen Bilder vorbeilaufen, um als Merkmal des Behälters (3) wenigstens das Vorliegen eines lichtbrechenden Fehlers oder die Qualität der Verteilung des Materials, aus dem der Behälter besteht, zu bestimmen, darin bestehend:

• jeden mit hohem Tempo vorbeilaufenden Behälter (3) durch die Lichtquelle (7), die eine Änderung der Lichtstärke entsprechend einem periodischen Muster $(7_1)$ mit der Periode $T_1$ in wenigstens einer ersten Änderungsrichtung (D) aufweist, zu beleuchten,

**dadurch gekennzeichnet, dass**:

• für jeden Behälter (3) eine Anzahl N, größer oder gleich drei, von Bildern des Behälters, der an der Lichtquelle vorbeiläuft und jeweils N unterschiedliche Positionen entlang des Ablaufweges einnimmt, aufgenommen wird,

• zwischen jeder Bildaufnahme eine relative Verschiebung zwischen dem Behälter und dem periodischen Muster in der ersten Änderungsrichtung (D) des periodischen Musters $(7_1)$ erzeugt wird,

• bei wenigstens N-1 Bildern eines gleichen Behälters, für wenigstens eine Menge von zu dem Behälter gehörenden Stellen, eine geometrische Transformation bestimmt und angewandt wird, um die zu dem Behälter gehörenden Pixel in den aufeinanderfolgenden, auf diese Weise neu eingestellten N Bildern eines gleichen Behälters in Übereinstimmung zu bringen,
• für jeden Behälter (3) anhand der aufeinanderfolgenden, neu eingestellten N Bilder des Behälters ein Phasenbild erstellt wird,
• das Phasenbild analysiert wird, um hieraus als Merkmal des Behälters (3) wenigstens das Vorliegen eines lichtbrechenden Fehlers oder die Qualität der Verteilung des Materials, aus dem der Behälter besteht, abzuleiten.

2. Verfahren nach Anspruch 1, **dadurch gekennzeichnet, dass**:

   • für jeden Behälter (3) anhand der aufeinanderfolgenden, neu eingestellten N Bilder des Behälters ein Intensitätsbild erstellt wird,
   • das Intensitätsbild analysiert wird, um hieraus als Merkmal des Behälters (3) das Vorliegen eines lichtabsorbierenden Fehlers und/oder die Abmessungen des Behälters abzuleiten.

3. Verfahren nach Anspruch 1, **dadurch gekennzeichnet, dass** die Analyse des Phasenbildes darin besteht, die Geschwindigkeit und/oder die Größe der Änderung zu bestimmen und die Geschwindigkeiten und/oder Größen mit Schwellwerten zu vergleichen, um das Vorliegen eines lichtbrechenden Fehlers oder die Qualität der Verteilung des Materials, aus dem der Behälter besteht, zu bestimmen.

4. Verfahren nach Anspruch 1, **dadurch gekennzeichnet, dass** es darin besteht:

   • jeden zu prüfenden Behälter (3) mit Hilfe einer Lichtquelle (7), die eine Änderung der Lichtstärke entsprechend einem periodischen Muster mit der Periode $T_2$ in einer von der ersten Änderungsrichtung verschiedenen zweiten Änderungsrichtung aufweist, zu beleuchten,
   • für jeden Behälter eine Anzahl N, größer oder gleich drei, von zusätzlichen Bildern des Objektes, das an der Lichtquelle vorbeiläuft und jeweils N unterschiedliche Positionen entlang des Ablaufweges einnimmt, aufzunehmen,
   • zwischen jeder Bildaufnahme eine relative Verschiebung zwischen dem Behälter und dem periodischen Muster in der zweiten Änderungsrichtung des periodischen Musters mit der Periode $T_2$ zu erzeugen,
   • für jeden Behälter anhand der neu eingestellten N Bilder des Objektes ein zweites Phasenbild zu erstellen,
   • das zweite Phasenbild zu analysieren, um als Merkmal des Behälters (3) das Vorliegen eines lichtbrechenden Fehlers oder die Qualität der Verteilung des Materials, aus dem der Behälter besteht, zu bestimmen.

5. Verfahren nach Anspruch 4, **dadurch gekennzeichnet, dass** es darin besteht, die Periode $T_1$, $T_2$ des periodischen Musters sowie die Häufigkeit der Bildaufnahmen derart zu wählen, dass die relativen Verschiebungen des Behälters (3) und des periodischen Musters ($7_1$) in der Änderungsrichtung des periodischen Musters gleiche Bruchteile der Periode des betrachteten Musters sind.

6. Verfahren nach einem der Ansprüche 1 bis 5, **dadurch gekennzeichnet, dass** es darin besteht, die relative Verschiebung zwischen dem periodischen Muster ($7_1$) und den Behältern (3) durch das Vorbeilaufen der Behälter (3) relativ zu dem fest bleibenden periodischen Muster ($7_1$) zu vollziehen.

7. Verfahren nach einem der Ansprüche 1 bis 5, **dadurch gekennzeichnet, dass** es darin besteht, die relative Verschiebung zwischen dem periodischen Muster ($7_1$) und den Behältern (3) dadurch zu vollziehen, dass die Verschiebung des periodischen Musters zwischen jeder Bildaufnahme sichergestellt wird.

8. Verfahren nach einem der Ansprüche 1 bis 7, **dadurch gekennzeichnet, dass** es darin besteht, die Bildaufnahmen und/oder die Verschiebung des Beleuchtungsmusters in Abhängigkeit von der Position der gegenüber dem Bildaufnahmesystem (9) vorbeilaufenden Behälter (3) auszulösen, um vordefinierte Verschiebungen zu erhalten.

9. Verfahren nach einem der Ansprüche 1 bis 8, **dadurch gekennzeichnet, dass** es darin besteht, ein periodisches Muster ($7_1$) zu wählen, das in der Änderungsrichtung (D) eine Sinusfunktion des Pegels des emittierten Lichts aufweist.

10. Verfahren nach einem der Ansprüche 1 bis 9, **dadurch gekennzeichnet, dass** es darin besteht, das periodische Muster so zu positionieren, dass eine Lichtstärkeänderung in wenigstens einer Richtung parallel zu der Ablaufrichtung der Behälter auftritt.

**11.** Verfahren nach einem der Ansprüche 1 bis 10, **dadurch gekennzeichnet, dass** es darin besteht, ein geradliniges periodisches Muster zu wählen.

**12.** Anlage zur Inline-Prüfung von transparenten oder transluzenten Behältern (3), um Merkmale der Behälter zu erfassen, und umfassend ein Mittel zur Beförderung (2) der Behälter (3), die kontinuierlich mit hohem Tempo durch eine Prüfstation (5) laufen, welche aus wenigstens einer Lichtquelle (7), die auf einer Seite der kontinuierlich mit hohem Tempo vorbeilaufenden Behälter angeordnet ist, und wenigstens einem System zur Aufnahme von Bildern (9) der Behälter, das auf der anderen Seite der Behälter angeordnet ist, besteht, sowie eine Einheit zur Analyse der aufgenommenen Bilder,

wobei die Lichtquelle (7) eine Änderung der Lichtstärke entsprechend einem periodischen Muster mit der Periode $T_1$ in wenigstens einer ersten Änderungsrichtung (D) aufweist,

**dadurch gekennzeichnet, dass**:

- ein erstes Bildaufnahmesystem (9) geeignet ist, eine Anzahl N, größer oder gleich drei, von Bildern eines jeden Behälters, der vor der Lichtquelle platziert ist, zu machen, wobei zwischen jeder Bildaufnahme eine relative Verschiebung zwischen dem Behälter (3) und dem periodischen Muster ($7_1$) in der ersten Änderungsrichtung (D) des periodischen Musters ($7_1$) erzeugt wird,
- eine Steuer- und Verarbeitungseinheit (13) umfasst:

  ◦ Mittel zum Bestimmen und Anwenden einer geometrischen Transformation bei wenigstens N-1 Bildern eines gleichen Behälters, die aus dem ersten Bildaufnahmesystem hervorgegangen sind, um die zu dem Behälter gehörenden Pixel in den aufeinanderfolgenden, auf diese Weise neu eingestellten N Bildern eines gleichen Behälters in Übereinstimmung zu bringen,
  ◦ Mittel zum Berechnen wenigstens eines Phasenbildes anhand von aufeinanderfolgenden, neu eingestellten N Bildern des Behälters,
  ◦ Mittel zum Analysieren der Phasenbilder, um hieraus wenigstens als Merkmal des Behälters (3) das Vorliegen eines lichtbrechenden Fehlers oder die Qualität der Verteilung des Materials, aus dem der Behälter besteht, abzuleiten.

**13.** Prüfanlage nach Anspruch 12, **dadurch gekennzeichnet, dass** die Steuer- und Verarbeitungseinheit (13) auch Mittel zum Berechnen wenigstens eines Intensitätsbildes anhand von neu eingestellten N Bildern des Behälters, die aus dem ersten Bildaufnahmesystem hervorgegangen sind, sowie Mittel zum Analysieren der Intensitätsbilder, um hieraus als Merkmal des Behälters (3) das Vorliegen eines lichtabsorbierenden Fehlers und/oder dessen Abmessungen abzuleiten, umfasst.

**14.** Prüfanlage nach Anspruch 13, **dadurch gekennzeichnet, dass** sie umfasst:

- ein Filter, das zwischen den Behältern (3) und der Lichtquelle (7) eingefügt ist, das das Licht entlang einer ersten Polarisationsrichtung linear polarisiert oder in einem ersten Polarisationsdrehsinn zirkular polarisiert,
- ein zweites Büdaufnahmesystem (9), das geeignet ist, eine Anzahl N, größer oder gleich drei, von Bildern eines jeden Behälters, der vor der Lichtquelle platziert ist, aufzunehmen,
- ein Filter, das zwischen den Behältern und dem zweiten Bildaufnahmesystem eingefügt ist, das das Licht entlang der Polarisationsrichtung, die zu der ersten orthogonal verläuft, linear polarisiert oder in dem zu dem ersten umgekehrten Polarisationsdrehsinn zirkular polarisiert,
- eine Steuer- und Verarbeitungseinheit (13), die umfasst:

  ◦ Mittel zum Bestimmen und Anwenden einer geometrischen Transformation bei wenigstens N-1 Bildern eines gleichen Behälters, die aus dem zweiten Bildaufnahmesystem hervorgegangen sind, um die zu dem Behälter gehörenden Pixel in den aufeinanderfolgenden, auf diese Weise neu eingestellten N Bildern eines gleichen Behälters in Übereinstimmung zu bringen,
  ◦ Mittel zum Berechnen wenigstens eines Intensitätsbildes anhand von neu eingestellten N Bildern des Behälters, die aus dem zweiten Bildaufnahmesystem hervorgegangen sind,
  ◦ Mittel zum Analysieren des Intensitätsbildes, um hieraus als Merkmal des Behälters (3) das Vorliegen eines den Polarisationszustand des Lichts verändernden Fehlers abzuleiten.

**15.** Anlage nach einem der Ansprüche 12 bis 14, **dadurch gekennzeichnet, dass** das periodische Muster ($7_1$) der Lichtquelle (7) fest ist, so dass die relative Verschiebung zwischen dem periodischen Muster ($7_1$) und den Behältern (3) durch das Vorbeilaufen der Behälter (3) relativ zu dem periodischen Muster ($7_1$) vollzogen wird.

**16.** Anlage nach einem der Ansprüche 12 bis 14, **dadurch gekennzeichnet, dass** das periodische Muster ($7_1$) der Lichtquelle (7) zwischen jeder Bildaufnahme verschoben wird, um die relative Verschiebung zwischen dem periodischen Muster ($7_1$) und den Behältern (3) zu vollziehen.

**17.** Anlage nach einem der Ansprüche 12 bis 16, **dadurch gekennzeichnet, dass** das periodische Muster ($7_1$) der Lichtquelle (7) so positioniert ist, dass eine Lichtstärkeänderung in wenigstens einer Richtung parallel zu der Ablaufrichtung der Behälter auftritt.

**18.** Prüfanlage nach einem der Ansprüche 12 bis 17, **dadurch gekennzeichnet, dass** die Lichtquelle (7) geeignet ist, ein periodisches Muster ($7_1$) aufzuweisen, das entlang seiner Änderungsrichtung eine Sinusfunktion des Pegels des emittierten Lichts aufweist.

**19.** Prüfanlage nach einem der Ansprüche 12 bis 18, **dadurch gekennzeichnet, dass** das Bildaufnahmesystem (9) Synchronisationsmitteln zugeordnet ist, um in Abhängigkeit von der Relativposition der Behälter in Bezug auf das periodische Muster der Lichtquelle (7) ausgelöst zu werden.

**20.** Prüfanlage nach einem der Ansprüche 12 bis 19, **dadurch gekennzeichnet, dass** die Steuer- und Verarbeitungseinheit (13) die Lichtquelle (7) derart steuert, dass das periodische Lichtmuster ($7_1$) für jede Aufnahme in einer gegebenen Richtung versetzt ist.

**Claims**

**1.** A method of an in-line method of optically inspecting transparent or translucent containers (3) traveling along a determined path $F_1$ at a high rate between a light source (7) and an image-taking system (9) for taking images of the containers and for analyzing the images taken, in order to determine as a characteristic of the container (3) at least the presence of a defect that refracts light or the quality with which the material constituting the container is distributed, consisting in illuminating each container (3) traveling at a high rate by means of the light source (7) that presents light intensity variation in a periodic pattern ($7_1$) of period $T_1$ along at least, a first variation direction (D), **characterized in that** :

  • for each container (3), taking a number N greater than or equal to three of images of the container traveling in front of the light source and occupying N different respective positions along the travel path;
  • between taking successive images, creating a relative shift between the container and the periodic pattern in the first variation direction (D) of the periodic pattern ($7_1$);
  • determining and applying a geometrical transformation in at least N-1 images of the same container for at least a set of points belonging to the container in order to put the pixels belonging to the container in the N successive images thus registered of the same container into coincidence;
  • for each container (3) using the N registered successive images of the container, constricting a phase image; and
  • analyzing the phase image in order to deduce therefrom, as a characteristic of the container (3), at least the presence of a defect that refracts light or the quality of the distribution of the material constituting the container.

**2.** A method according to claim 1, **characterized by** the following steps:

  • for each container (3), using the N registered successive images of the container to construct an intensity image; and
  • analyzing the intensity image in order to deduce therefrom as a characteristic of the container (3), the presence of a defect that absorbs light and/or the dimensions of the container.

**3.** A method according to claim 1, **characterized in that** the analysis of the phase image consists in determining the speed and/or the amplitude of variation and in comparing said speeds and/or amplitudes with thresholds in order to determine the presence of a defect that refracts light or the quality of the distribution of the material constituting the container.

**4.** A method according to claim 1, **characterized in that** it consists in:

  • illuminating each container (3) to be inspected with the help of a light source (7) presenting light intensity variation in a periodic pattern of period $T_2$ in a second variation direction different of the first variation direction;

• for each container, taking a number N greater than or equal to three of additional images of the article traveling in front of the light source and occupying three N respective different positions along the travel path;
• between taking successive images, creating a relative shift between the container and the periodic pattern alone the second variation direction of the periodic pattern of period $T_2$;
• for each container, using the N registered images of the article to construct a second phase image; and
• analyzing the second phase image in order to determine, as a characteristic of the container (3) the presence of a defect that refracts light or the quality of the distribution of the material constituting the container.

5. A method according to claim 4, **characterized in that** it consists in selecting the period $T_1$, $T_2$ of the periodic pattern and the occurrences of the images taken in such a manner that the relative shifts of the container (3) and of the periodic pattern ($7_1$) along the variation direction of the periodic pattern are equal fractions of the period of the pattern under consideration.

6. A method according to any one of claims 1 to 5, **characterized in that** it consists in obtaining the relative shift between the periodic pattern ($7_1$) and the containers (3) by the containers (3) traveling relative to the periodic pattern ($7_1$) that remains stationary.

7. A method according to any one of claims 1 to 5, **characterized in that** it consists in obtaining the relative shift between the periodic pattern ($7_1$) and the containers (3) by causing the periodic pattern to shift between taking successive images.

8. A method according to any one of claims 1 to 7, **characterized in that** it consists in triggering the taking of images and/or the shifting of the illumination pattern as a function of the positions of the containers (3) traveling relative to the image-taking system (9) so as to obtain predefined shifts.

9. A method according to any one of claims 1 to 8, **characterized in that** it consists in selecting a periodic pattern ($7_1$) presenting a function in the variation in the level of the emitted light along the variation direction (D) that is sinusoidal.

10. A method according to any one of claims 1 to 9, **characterized in that** it consists in positioning the periodic pattern in such a manner that a variation in light intensity occurs in at least one direction parallel to the travel direction of the containers.

11. A method according to any one of claims 1 to 10, **characterized in that** it consists in selecting a periodic pattern that is rectilinear.

12. An installation for in-line inspection of transparent or translucent containers (3) in order to detect characteristics of the containers, the installation comprising conveyor means (2) for conveying the containers (3) so that they travel at continuous high speed through an inspection station (5) made up of at least one light source (7) placed on one side of the continuous high speed traveling containers and at least one image-taking system (9) for taking images of the containers arranged on the other side of the containers, together with a unlit for analyzing the images taken, the installation being the light source (7) presenting light intensity variation with a periodic pattern of period $T_1$ along at least a first variation direction (D) **characterized in that**;

• a first image-taking system (9) is suitable for taking a number N greater than or equal to three of images of each container placed in front of the light source, with a relative shift being created between the container (3) and the periodic pattern ($7_1$) along the first variation direction (D) of the periodic pattern ($7_1$) between taking successive images; and
a control and processor unit (13) comprises:

• means for determining and applying a geometrical transformation in at least N-1 images of the same container coming from the first image-taking system in order to put into coincidence pixels of the container in the N successive images of the same container as put into register in this way;
• means for calculating at least one phase image from N registered successive images of the container; and
• means for analyzing the phase images in order to deduce therefrom, as a characteristic of the container, (3) at least the presence of a defect that refracts light or the quality of the distribution of the material constituting the container.

13. An inspection installation according to claim 12, **characterised in that** the control and processor unit (13) also includes means for calculating at least one intensity image from N registered images of the container obtained from the first image-taking system, and means for analyzing intensity images in order to deduce therefrom, as a characteristic of the container (3), the presence of a defect that absorbs light, and/or its dimensions.

14. An inspection installation according to claim 13, **characterized in that** it includes:

- a filter interposed between the containers (3) and the light source (7) to polarize light linearly in a first polarization direction or circularly in a first direction of circular polarisation;
- a second image-taking system (9) suitable for taking a number N greater than or equal to three of images of each container placed in front of the light source;
- a filter interposed between the containers and the second image-taking system for polarizing light linearly in the polarization direction orthogonal to the first or circularly in the direction of circular polarization that is opposite to the first; and
- a control and processor unit (13) comprising:

   - means for determining and applying a geometrical transformation in at least N-1 images of the same container coming from the first image-taking system in order to put into coincidence pixels of the container in the N successive images of the same container as put into register in this way;
   - means for calculating at least one intensity image from N registered images of the container coming from the second image-taking system; and
   - means for analyzing the intensity images in order to deduce therefrom, as a characteristic of the container (3), the presence of a defect that modifiers the polarization state of light.

15. An installation according to any one of claims 12 to 14, **characterized in that** the periodic pattern ($7_1$) of the light source (7) is stationary, such that the relative shift between the periodic pattern ($7_1$) and the containers (3) is obtained by the containers (3) traveling relative to the periodic pattern ($7_1$),

16. An installation according to any one of claims 12 to 14, **characterized in that** the periodic pattern ($7_1$) of the light source (7) is shifted between taking successive images in order to obtain the relative shifts between the periodic pattern ($7_1$) and the containers (3).

17. An installation according to any one of claims 12 to 16, **characterized in that** the periodic pattern ($7_1$) of the light source (7) is positioned in such a manner that a variation in light intensify occurs along at least one direction parallel to the travel direction of the containers.

18. An inspection installation according to any one of claims 12 to 17, **characterized in that** the light source (7) is suitable for presenting a periodic pattern (7) presenting a function for variation in the level of emitted light along its variation direction that is sinusoidal.

19. An inspection Installation according to any one of claims 12 to 18, **characterized in that** the image-taking system (9) is associated with synchronizing means in order to be triggered as a function of the positions of containers relative to the periodic pattern of the light source (7).

20. An inspection installation according to any one of claims 12 to 19, **characterized in that** the control and processor unit (13) controls the light source (7) in such a manner that the periodic light pattern ($7_1$) is shifted in a given direction for taking each image.

FIG.1

FIG.2

FIG.3

FIG.4

FIG.5

FIG.6

FIG.7

FIG.8

FIG.9A     FIG.9B     FIG.9C

**EP 2 875 339 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2794241
- US 5004909 A
- FR 2907553
- FR 2958040
- EP 1980843 A